# EUROPÄISCHE PATENTSCHRIFT

(11) **EP 3 749 922 B1**
(45) Veröffentlichungstag und Bekanntmachung des Hinweises auf die Patenterteilung: **15.12.2021**
(21) Anmeldenummer: 19703065.3
(22) Anmeldetag: 01.02.2019
(51) Int. Cl.: G01B 11/275

(54) **VORRICHTUNG UND VERFAHREN ZUR FAHRWERKSVERMESSUNG**
DEVICE AND METHOD FOR CHASSIS MEASUREMENT
DISPOSITIF ET PROCÉDÉ DE MESURE D'UN CHÂSSIS

(30) Priorität: 05.02.2018 DE 102018201737
(43) Veröffentlichungstag der Anmeldung: 16.12.2020
(73) Patentinhaber: Beissbarth GmbH, 80993 München (DE)
(72) Erfinder: LEGEN, Johann, 82541 Münsing (DE); NANJUNDAIAH, Raghu, 560012 Bangalore (IN); STRASSER, Stefan, 82140 Olching (DE); GYANANI, Vikresh Kumar, 560102 Bangalore (IN)
(74) Vertreter: Schmitt-Nilson Schraud Waibel Wohlfrom Patentanwälte Partnerschaft mbB
(86) Internationale Anmeldenummer: PCT/EP2019/052529
(87) Internationale Veröffentlichungsnummer: WO 2019/149902

(56) Entgegenhaltungen:
- EP-A2- 1 186 857
- DE-T2- 69 814 132
- US-A- 6 163 968

## Beschreibung

Die Erfindung betrifft ein Verfahren zur Fahrwerksvermessung, insbesondere ein Verfahren zum Starten eine Einschlagroutine. Die Erfindung betrifft auch eine Vorrichtung, die ausgebildet ist, ein derartiges Verfahren auszuführen.

Verfahren zum Vermessen des Fahrwerks eines Fahrzeugs ("Fahrwerksvermessung") umfassen häufig eine Einschlagroutine zur Erfassung achsspezifischer Daten, ins-besondere des Nachlaufs. Beim Ausführen einer Einschlagroutine werden die lenkbaren Räder, in der Regel die Vorderräder, des zu vermessenden Fahrzeuges durch eine Bewegung des Lenkrads nach links und rechts bis in eine vorgegebene Winkelposition oder darüber hinaus eingeschlagen. Durch geeignete Messungen während der Einschlagbewegung können der Nachlauf und andere Parameter der Fahrwerksgeometrie bestimmt werden.

DE 698 14 132 T2 offenbart ein computergesteuertes Radausrichtungssystem mit einer Vielzahl von Ausrichtungswinkelsensoren, die dazu eingerichtet sind, an Fahrzeugrädern montiert zu werden und Radausrichtungswinkel zu erfassen. Das Ausrichtungssystem umfasst einen Computer, der mit der Vielzahl von Sensoren gekoppelt bzw. verbunden ist und dazu eingerichtet ist, Signale von den Sensoren zu empfangen bzw. zu erhalten, welche die Radausrichtungswinkel und Radrotation anzeigen bzw. darauf hinweisen, und die an dem Computer eingehenden Signale zu überwachen. Der Computer ist auch dazu eingerichtet, bei Detektion einer Änderung in dem Lenkwinkel von wenigstens einem lenkbaren Rad das Einleiten bzw. die Auslösung eines computerisierten bzw. computergesteuerten Nachlaufmeßverfahrens zu bewirken.

Gemäß US 6 163 968 A werden das Lenkradspiel und das Federungsspiel eines Fahrzeugs überprüft, indem vordefinierte Bewegungen des Lenkrads und der Straßenräder verglichen werden. Eine Lenkradbefestigung, die zur Montage am Lenkrad angepasst ist, erleichtert insbesondere die Bestimmung des Lenkradspiels. Schnell montierbare und abnehmbare Winkelsensoren für Straßenräder erleichtern das Verfahren ebenfalls.

EP 1 186 857 A2 beschreibt ein Verfahren zur programmgesteuerten Fahrwerkvermessung bei Kraftfahrzeugen, bei dem die Schritte des Meßverfahrens unter der Steuerung eines zentralen Rechners für die Fahrwerkvermessung durchgeführt werden. Dabei werden die Räder einer lenkbaren Achse durch eine programmgesteuerte maschinelle Einrichtung in die zur Durchführung der Fahrwerkvermessung erforderlichen Positionen eingeschlagen bzw. ausgerichtet.

Das Durchführen einer Einschlagroutine kann in einem Programm zur Fahrwerksvermessung, das von einer Vorrichtung zur Fahrwerksvermessung ausgeführt wird, fest vorgegeben sein. In diesem Fall hat der Benutzer keine Wahl und muss bei jeder Fahrwerksvermessung eine Einschlagroutine durchführen, auch wenn dies aufgrund der jeweiligen Umstände nicht notwendig oder erwünscht ist.

Alternativ kann das Durchführen einer Einschlagroutine im Programm zur Fahrwerksvermessung aus- und abwählbar sein. In diesem Fall ist eine entsprechende Eingabe notwendig, z.B. eine Eingabe über ein geeignetes Eingabegerät, wie z.B. eine Tastatur, eine Maus, einen Touchscreen oder Ähnliches, um die Einschlagroutine auszuwählen und zu starten.

Eine derartige Eingabe unterbricht den Arbeitsablauf des Benutzers und erfordert zusätzlich die Verwendung eines Eingabegerätes.

Es ist eine Aufgabe der Erfindung, die Fahrwerksvermessung zu vereinfachen, insbesondere soll es dem Benutzer einer Fahrwerksvermessungseinrichtung erleichtert werden, selektiv eine Einschlagroutine zu starten.

Ein Verfahren zum Starten einer Einschlagroutine zum Vermessen der Fahrwerks-geometrie eines Fahrzeugs, insbesondere eines Kraftfahrzeugs, umfasst gemäß Anspruch 1, das Fahrzeug auf einem Messplatz mit einer Vorrichtung zur Fahrwerksvermessung zu positionieren und wenigstens ein lenkbares Rad des Fahrzeugs innerhalb eines vorgegeben Zeitfensters durch eine Lenkbewegung zumindest über einen vorgegebenen Winkel ("Mindestwinkel") einzuschlagen, den Einschlagwinkel des wenigstens einen Rades zu detektieren und abhängig von dem detektierten Einschlagwinkel eine Einschlagroutine aus verschiedenen Einschlagroutinen auszuwählen und zu starten.

Eine erfindungsgemäße Vorrichtung zum Vermessen der Fahrwerksgeometrie eines Fahrzeugs ist durch Anspruch 6 definiert.

Ein Verfahren und eine Vorrichtung gemäß Ausführungsbeispielen der Erfindung ermöglichen es einem Benutzer, eine Lenkeinschlagroutine bequem durch einen Lenkeinschlag, d.h. durch Drehen des Lenkrades des Fahrzeugs, zu starten. Der Benutzer muss dazu weder das Fahrzeug verlassen, noch auf eine spezielle Eingabevorrichtung zurückgreifen.

Das Starten einer Lenkeinschlagroutine durch Lenkeinschlag ist intuitiv, da eine Einschlagroutine das Einschlagen der Lenkräder erfordert.

Dabei kann insbesondere eine Einschlagroutine ausgewählt und gestartet werden, in der das wenigstens eine lenkbare Rad zunächst in die bereits eingeschlagene Richtung eingeschlagen werden muss.

So kann, wenn ein Einschlag nach links detektiert worden ist, eine Einschlagroutine gestartet werden, die zunächst einen Lenkeinschlag nach links und erst in einem zweiten Schritt einen Lenkeinschlag nach rechts erfordert. Entsprechend kann, wenn ein Einschlag nach rechts detektiert worden ist, eine Einschlagroutine gestartet werden, die zunächst einen Lenkeinschlag nach rechts und erst in einem zweiten Schritt einen Lenkeinschlag nach links erfordert.

Dies erhöht die Benutzerfreundlichkeit, da unabhängig von der Richtung der initialen Lenkbewegung stets eine passende Einschlagroutine gestartet wird.

In einer Ausführungsform liegt der vorgegebene Mindestwinkel, den die Räder mindestens eingeschlagen werden müssen, um eine Einschlagroutine zu starten, zwischen 2° und 4°. Der vorgegebene Mindestwinkel kann insbesondere 2,5° bis 3° oder 3° betragen. Ein vorgegebener Mindestwinkel verhindert, dass die Einschlagroutine versehentlich ausgelöst wird. Ein hinreichend kleiner Mindestwinkel verhindert, dass eine unangenehm große Lenkbewegung ausgeführt werden muss, um eine Lenkeinschlagroutine zu starten.

In einer Ausführungsform liegt das vorgegebene Zeitfenster zwischen 2 und 10 Sekunden, insbesondere zwischen 5 und 10 Sekunden. Das vorgegebene Zeitfenster kann insbesondere 5, 7, oder 10 Sekunden betragen. Ein Zeitfenster zwischen 2 und 10 Sekunden gibt dem Benutzer ausreichend Zeit, durch eine geeignete Lenkbewegung eine Einschlagroutine auszulösen, ohne die Achsvermessung zu lange aufzuhalten, wenn keine Einschlagroutine durchgeführt werden soll.

Die Länge des vorgegebenen Zeitfensters und die Größe des Mindestwinkels können einstellbar sein, um das Verfahren und die Vorrichtung an die individuellen Bedürfnisse des jeweiligen Benutzers und/oder Fahrzeugs anpassen zu können.

In einer Ausführungsform umfasst die Vorrichtung eine Anzeigevorrichtung, die es ermöglicht, Informationen an den Benutzer auszugeben. Die Anzeigevorrichtung kann insbesondere ausgebildet sein, dem Benutzer Informationen über das vorgegebene Zeitfenster und/oder über den vorgegebenen Mindestwinkel auszugeben. Die Vorrichtung kann auch ausgebildet sein, dem Benutzer anzuzeigen, ob der vorgegebene Mindestwinkel bereits erreicht worden ist und/oder ob das vorgegebene Zeitfenster abgelaufen ist.

In einer Ausführungsform umfasst die Vorrichtung zusätzlich eine Bedienungseinrichtung, die es ermöglicht, Parameter, insbesondere das vorgegebene Zeitfenster und/oder über den vorgegebenen Mindestwinkel zu verändern.

Die Bedienungseinrichtung kann insbesondere als drahtgebundene oder drahtlose Fernbedienungseinrichtung, ausgebildet sein, die es einem Benutzer ermöglicht, Parameter, insbesondere das vorgegebene Zeitfenster und/oder den vorgegebenen Mindestwinkel zu verändern, ohne das Fahrzeug hierfür verlassen zu müssen.

Ein Ausführungsbeispiel der Erfindung wird im Folgenden unter Bezugnahme auf die beigefügten Figuren beschrieben.
Figur 1 zeigt in einer schematischen Darstellung einen Messplatz zur Fahrzeugvermessung gemäß einem Ausführungsbeispiel der Erfindung.
Figur 2 zeigt ein schematisches Ablaufdiagramm eines Verfahrens zur Fahrzeugvermessung gemäß einem Ausführungsbeispiel der Erfindung.

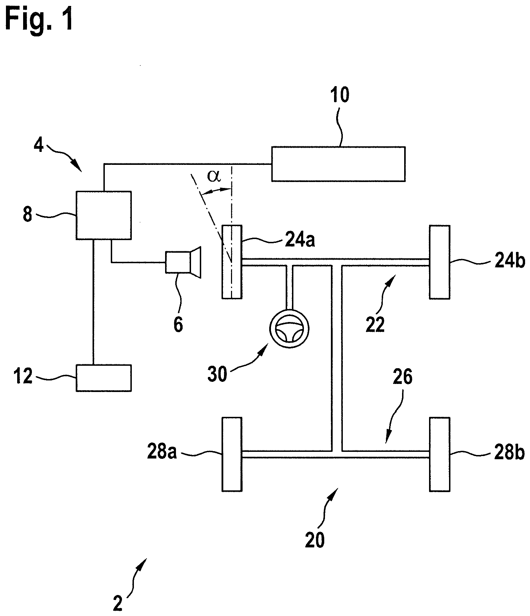

Figur 1 zeigt in einer schematischen Darstellung einen Messplatz 2 zur Fahrzeugvermessung gemäß einem Ausführungsbeispiel der Erfindung.

Auf dem Messplatz 2 befindet sich ein schematisch dargestelltes Fahrzeug 20. Das Fahrzeug 20 hat eine Vorderachse 22 mit Vorderrädern 24a, 24b und eine Hinterachse 26 mit Hinterrädern 28a, 28b.

Die Vorderräder 28a, 28b sind über ein Lenkrad 30 und einen nicht im Detail gezeigten Lenkmechanismus lenkbar, d.h. um eine Hochachse einschlagbar.

Auf dem Messplatz 2 befindet sich darüber hinaus eine Vorrichtung 4 zum Vermessen der Fahrwerksgeometrie des Fahrzeugs 20.

Die Vorrichtung 4 umfasst wenigstens einen Sensor 6, der ausgebildet ist, den Lenkeinschlag wenigstens eines der lenkbaren Vorderräder 24a, 24b des Fahrzeugs 20 zu detektieren.

Die Vorrichtung 4 umfasst darüber hinaus eine Steuervorrichtung 8, die ausgebildet ist, den Betrieb der Vorrichtung 4 zu steuern, eine Anzeigevorrichtung 10, z.B. einen Bildschirm, und eine Bedienvorrichtung 12, die es ermöglicht, Kommandos in die Steuervorrichtung 8 einzugeben.

Die Bedienvorrichtung 12 kann, wie in der Figur 1 gezeigt, drahtgebunden oder über eine drahtlose Verbindung, z.B. WLAN, Bluetooth^{®}, etc. mit der Steuervorrichtung 8 verbunden sein.

Die Bedienvorrichtung 12 kann, z.B. in Form eines berührungsempfindlichen Bildschirms ("Touchscreen"), integral mit der Anzeigevorrichtung 10 ausgebildet sein. Alternativ können die Bedienvorrichtung 12 und die Anzeigevorrichtung 10 separat voneinander ausgebildet sein. In diesem Fall kann die Anzeigevorrichtung 10 vor dem Fahrzeug 20 oder seitlich von dem Fahrzeug 20 positioniert sein, so dass sie für einen Bediener, der sich auf dem Fahrersitz des Fahrzeugs 20 befindet, gut einsehbar ist.

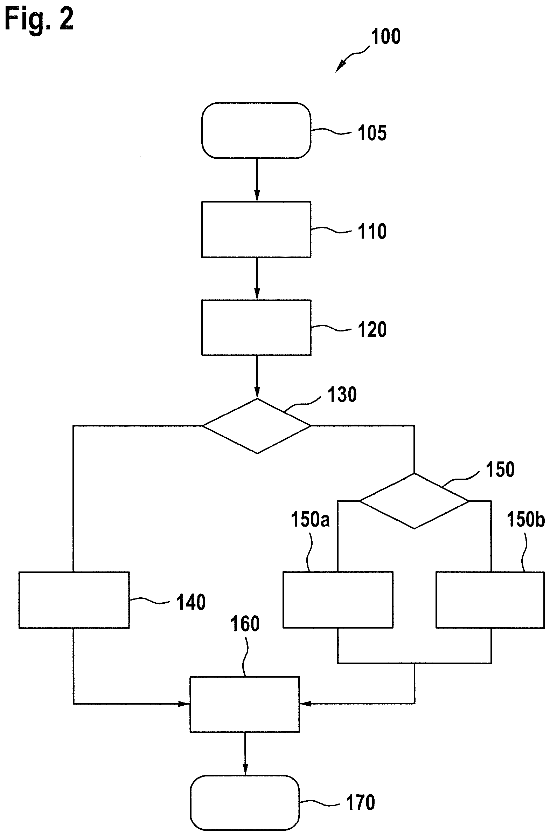

Ein Ausführungsbeispiel eines Verfahrens 100 zum Starten einer Einschlagroutine, wird im Folgenden unter Bezugnahme auf das in der Figur 2 dargestellte Flussdiagramm beschrieben.

In einem ersten Schritt 105 wird das zu vermessende Fahrzeug 20 auf dem Messplatz 2 an der Vorrichtung 4 positioniert, wie es in der Fig. 1 gezeigt ist.

Nachdem das Fahrzeug 20 geeignet auf dem Messplatz 2 platziert worden ist, können zunächst Verfahrensschritte zur Fahrwerksvermessung durchgeführt werden, wie sie aus dem Stand der Technik bekannt sind (Schritt 110). Insbesondere können Verfahrensschritte durchgeführt werden, die keinen Lenkeinschlag der Vorderräder 24a, 24b des Fahrzeugs erfordern.

Sobald eine Einschlagroutine durchgeführt werden soll/kann, erfasst der wenigstens eine Sensor 6 die Stellung, d.h. den Lenkeinschlag, wenigstens eines der lenkbaren Vorderräder 24a, 24b des Fahrzeugs 20. Optional kann ein zweiter, in der Figur 1 nicht gezeigter, Sensor 6 vorgesehen sein, der den Lenkeinschlag des zweiten Vorderrades 24b erfasst, oder es kann eine gemeinsamer Sensor 6 für beide Vorderräder 24a, 24b vorgesehen sein.

Zusätzlich kann einem (nicht in den Figuren gezeigten) Bediener auf der Anzeigevorrichtung 10 angezeigt werden, dass er innerhalb eines vorgegebenen Zeitraumes einen Lenkeinschlag über einen vorgegebenen Mindestwinkel ausführen muss, wenn er die Lenkeinschlagroutine starten möchte. Der vorgegebene Zeitraum kann 2 bis 10 Sekunden, insbesondere 3, 5, 7, oder 10 Sekunden umfassen.

Der vorgegebene Zeitraum kann insbesondere in Form eines "Countdowns" heruntergezählt werden.

Innerhalb des vorgegebenen Zeitraums wertet die Steuervorrichtung 8 das von dem wenigstens einen Sensor 6 bereitgestellte Signal aus und prüft, ob die lenkbaren Vorderräder 24a, 24b des Fahrzeugs 2 wenigstens in dem vorgegebenen Winkel α eingeschlagen werden (Schritt 130).

Werden die lenkbaren Vorderräder 24a, 24b des Fahrzeugs 2 innerhalb des vorgegebenen geben Zeitraums wenigstens in dem vorgegebenen Winkel α eingeschlagen, wird eine Einschlagroutine 150a, 150b gestartet.

Abhängig von der Richtung des detektierten Einschlags können unterschiedliche Einschlagroutinen 150a, 150b gestartet werden (Schritt 150). Die Steuervorrichtung 8 kann insbesondere ausgebildet sein, bei einem detektierten Einschlag nach links eine Einschlagroutine 150a zu starten, die zunächst einen Lenkeinschlag nach links und erst in einem zweiten Schritt einen Lenkeinschlag nach rechts erfordert. Entsprechend kann die Steuervorrichtung 8 ausgebildet sein, bei einem detektierten Einschlag nach rechts eine Einschlagroutine 150b zu starten, die zunächst einen Lenkeinschlag nach rechts und erst in einem zweiten Schritt einen Lenkeinschlag nach links erfordert.

Werden die Vorderräder 24a, 24b des Fahrzeugs 2 im vorgegebenen Zeitraum nicht mindestens in dem vorgegebenen Winkel eingeschlagen, wird keine Lenkeinschlagroutine gestartet (Schritt 140) und das Verfahren mit dem Schritt 160 fortgesetzt.

Dies kann umfassen, das Verfahren sofort zu beenden (Schritt 170), oder zuvor noch weitere Verfahrensschritte zur Fahrwerksvermessung durchzuführen.

Der vorgegebene Zeitraum und/oder der Mindestwinkel a, den die Vorderräder 24a, 24b des Fahrzeugs 2 einschlagen werden müssen, um eine Einschlagroutine 150a, 150b zu starten, können über Bedienvorrichtung 12 verändert werden. Die Bedienvorrichtung 12 kann es auch ermöglichen, das Warten auf einen Lenkeinschlag bereits vor Ablauf des vorgegebenen Zeitraumes abzubrechen und mit dem Schritt 160 fortzusetzen.

## Patentansprüche

1. Verfahren zum Auslösen einer Einschlagroutine (150a, 150b) zum Vermessen der Fahrwerksgeometrie eines Fahrzeugs (20), insbesondere eines Kraftfahrzeugs (20), wobei das Verfahren umfasst:
das Fahrzeug (20) auf einem Messplatz mit einer Vorrichtung (4) zur Fahrwerksvermessung zu positionieren;
wenigstens ein lenkbares Rad (24a, 24b) des Fahrzeugs (20) innerhalb eines vorgegeben Zeitfensters mindestens über einen vorgegebenen Winkel (α) einzuschlagen;
den Einschlagwinkel des wenigstens einen lenkbaren Rades (24a, 24b) zu
detektieren
**dadurch gekennzeichnet, dass**
abhängig von dem detektierten Einschlagwinkel eine Einschlagroutine aus verschiedenen Einschlagroutinen ausgewählt und gestartet wird.

2. Verfahren nach Anspruch 1, wobei das Verfahren umfasst, eine Einschlagroutine (150a, 150b) zu starten, in der das wenigstens eine lenkbare Rad (24a, 24b) zunächst in die bereits eingeschlagene Richtung eingeschlagen werden muss.

3. Verfahren nach einem der vorangehenden Ansprüche, wobei der vorgegebene Mindestwinkel (α) zwischen 2° und 4° liegt, wobei der vorgegebene Mindestwinkel (α) insbesondere zwischen 2,5° und 3,5°, insbesondere 3° beträgt.

4. Verfahren nach einem der vorangehenden Ansprüche, wobei das vorgegebene Zeitfenster zwischen 2 und 10 Sekunden, insbesondere zwischen 5 und 10 Sekunden, insbesondere 5, 7, oder 10 Sekunden beträgt.

5. Verfahren nach einem der vorangehenden Ansprüche, wobei das vorgegebene Zeitfenster und/oder der vorgegebene Mindestwinkel (α) einstellbar sind.

6. Vorrichtung (4) zum Vermessen der Fahrwerksgeometrie eines Fahrzeugs (20), wobei die Vorrichtung (4) umfasst:
wenigstens einen Sensor (6), der ausgebildet ist, den Einschlagwinkel wenigstens eines lenkbaren Rades (24a, 24b) eines zu vermessenden Fahrzeugs (20) zu detektieren; und
eine Steuervorrichtung (8), die ausgebildet ist, eine Einschlagroutine (150a, 150b) zu starten, wenn der wenigstens eine Sensor (6) in einem vorgegebenen Zeitfenster einen Lenkeinschlag des wenigstens einen lenkbaren Rades (24a, 24b) detektiert hat und der detektierte Lenkeinschlag einen vorgegebenen Mindestwinkel (α) überschritten hat,
**dadurch gekennzeichnet, dass**
die Steuervorrichtung (8) ausgebildet ist, abhängig von dem detektierten Einschlagwinkel eine Einschlagroutine aus verschiedene Einschlagroutinen auszuwählen und zu starten.

7. Vorrichtung (4) nach Anspruch 6, wobei die Vorrichtung (4) zusätzlich eine Anzeigevorrichtung (10) aufweist, die ausgebildet ist, Informationen an einen Benutzer der Vorrichtung (4) auszugeben.

8. Vorrichtung (4) nach Anspruch 7, wobei die Anzeigevorrichtung (10) insbesondere ausgebildet ist, Informationen über das vorgegebene Zeitfenster und/oder über den vorgegebenen Mindestwinkel (α) auszugeben.

9. Vorrichtung (4) nach einem der Ansprüche 6 bis 8, wobei die Vorrichtung (4) zusätzlich eine Bedienungseinrichtung (12), insbesondere eine Fernbedienungseinrichtung (12), aufweist, die es ermöglicht, das vorgegebene Zeitfenster und/oder den vorgegebenen Mindestwinkel (α) zu verändern.

## Claims

1. A method for triggering a turning routine (150a, 150b) for measuring the wheel alignment geometry of a vehicle (20), in particular a motor vehicle (20), the method comprising:
positioning the vehicle (20) on a measuring site with a device (4) for wheel alignment measurement;
turning at least one steerable wheel (24a, 24b) of the vehicle (20) within a preset time window at least over a preset angle (a);
detecting the turning angle of the at least one steerable wheel (24a, 24b),
**characterized in that**
a turning routine is selected from among different turning routines in accordance with the turning angle detected and is started.

2. A method according to claim 1,
wherein the method comprises starting a turning routine (150a, 150b) in which the at least one steerable wheel (24a, 24b) must first be turned into the direction already turned.

3. A method according to any of the preceding claims,
wherein the preset minimum angle (a) is between 2° and 4°, wherein the preset minimum angle (a) is in particular between 2.5° and 3.5°, and in particular is 3°.

4. A method according to any of the preceding claims,
wherein the preset time window is between 2 and 10 seconds, in particular between 5 and 10 seconds, and in particular is 5, 7 or 10 seconds.

5. A method according to any of the preceding claims,
wherein the preset time window and/or the preset minimum angle (a) are adjustable.

6. A device (4) for measuring the wheel alignment geometry of a vehicle (20), the device (4) comprising:
at least one sensor (6) which is designed to detect the turning angle of at least one steerable wheel (24a, 24b) of a vehicle (20) to be measured; and
a control device (8) which is designed to start a turning routine (150a, 150b) when the at least one sensor (6), in a preset time window, has detected a turning angle of the at least one steerable wheel (24a, 24b) and the detected turning angle has exceeded a preset minimum angle (a),
**characterized in that**
the control device (8) is designed to select and start a turning routine from among different turning routines in accordance with the turning angle detected.

7. A device (4) according to claim 6,
wherein the device (4) additionally comprises a display device (10) which is designed to output information to a user of the device (4).

8. A device (4) according to claim 7,
wherein the display device (10) is designed in particular to output information on the preset time window and/or the preset minimum angle (a).

9. A device (4) according to any of claims 6 to 8,
wherein the device (4) additionally comprises an operating device (12), in particular a remote control device (12), which enables changing of the preset time window and/or the preset minimum angle (a).

## Revendications

1. Procédé de déclenchement d'une routine de braquage (150a, 150b) pour mesurer la géométrie du châssis d'un véhicule (20), en particulier d'un véhicule automobile (20), le procédé impliquant de :
positionner le véhicule (20) sur un poste de mesure doté d'un dispositif (4) de mesure de châssis ;
braquer au moins une roue directrice (24a, 24b) du véhicule (20) durant une fenêtre de temps prédéfinie selon au moins un angle prédéfini (α) ;
détecter l'angle de braquage de la roue directrice (24a, 24b), une au moins,
**caractérisé en ce que**,
en fonction de l'angle de braquage détecté, une routine de braquage est sélectionnée parmi différentes routines de braquage et lancée.

2. Procédé selon la revendication 1, ce procédé incluant de lancer une routine de braquage (150a, 150b), dans laquelle la roue directrice (24a, 24b), une au moins, doit d'abord être braquée dans la direction déjà braquée.

3. Procédé selon l'une quelconque des revendications précédentes, dans lequel l'angle minimal prédéfini (α) se situe entre 2° et 4°, dans lequel l'angle minimal prédéfini (α) est en particulier entre 2,5° et 3,5°, en particulier de 3°.

4. Procédé selon l'une quelconque des revendications précédentes, dans lequel la fenêtre de temps prédéfinie est entre 2 et 10 secondes, en particulier entre 5 et 10 secondes, en particulier de 5, 7 ou 10 secondes.

5. Procédé selon l'une quelconque des revendications précédentes, dans lequel la fenêtre de temps prédéfinie et/ou l'angle minimal prédéfini (α) sont réglables.

6. Dispositif (4) de mesure de la géométrie du châssis d'un véhicule (20), le dispositif (4) comprenant :
au moins un capteur (6) qui est réalisé de manière à détecter l'angle de braquage d'au moins une roue directrice (24a, 24b) d'un véhicule à mesurer (20) ; et
un dispositif de commande (8) qui est réalisé de manière à lancer une routine de braquage (150a, 150b) lorsque le capteur (6), un au moins, a détecté, dans une fenêtre de temps prédéfinie, un braquage de la roue directrice (24a, 24b), une au moins, et que le braquage détecté dépasse un angle minimal prédéfini (α),
**caractérisé en ce que**
le dispositif de commande (8) est réalisé de manière à sélectionner, en fonction de l'angle de braquage détecté, une routine de braquage parmi différentes routines de braquage et à la lancer.

7. Dispositif (4) selon la revendication 6, dans lequel le dispositif (4) présente en outre un dispositif d'affichage (10) qui est réalisé de manière à fournir des informations à un utilisateur du dispositif (4).

8. Dispositif (4) selon la revendication 7, dans lequel le dispositif d'affichage (10) est en particulier réalisé de manière à produire des informations sur la fenêtre de temps prédéfinie et/ou sur l'angle minimal prédéfini (α).

9. Dispositif (4) selon l'une quelconque des revendications 6 à 8, ce dispositif (4) présentant en outre un dispositif de manœuvre (12), en particulier un dispositif de télécommande (12) qui permet de modifier la fenêtre de temps prédéfinie et/ou l'angle minimal prédéfini (α).
